# EUROPÄISCHE PATENTSCHRIFT

(11) **EP 1 581 590 B1**
(45) Veröffentlichungstag und Bekanntmachung des Hinweises auf die Patenterteilung: **19.04.2006**
(21) Anmeldenummer: 03767762.2
(22) Anmeldetag: 06.12.2003
(51) Int. Cl.: C08L 23/00, D06M 13/46, D06M 13/50, C08K 5/10

(54) **HYDROPHILE POLYOLEFINMATERIALIEN UND VERFAHREN ZU DEREN HERSTELLUNG**
HYDROPHILIC POLYOLEFIN MATERIALS AND METHOD FOR PRODUCING THE SAME
MATERIAUX POLYOLEFINE HYDROPHILES ET PROCEDE DE PRODUCTION CORRESPONDANT

(30) Priorität: 11.12.2002 DE 10257730; 25.02.2003 DE 10307867
(43) Veröffentlichungstag der Anmeldung: 05.10.2005
(73) Patentinhaber: Corovin GmbH, 31224 Peine (DE)
(72) Erfinder: BORNEMANN, Steffen, 06800 Jessnitz (DE); JOERRES, Volker, 31234 Edemissen (DE); VOGES, Michael, 64739 Hoechst (DE)
(86) Internationale Anmeldenummer: PCT/EP2003/013826
(87) Internationale Veröffentlichungsnummer: WO 2004/052985

(56) Entgegenhaltungen:
- US-A- 6 008 145
- US-A1- 2001 008 965
- US-A1- 2002 019 184
- US-B1- 6 211 101

## Beschreibung

Die vorliegende Erfindung betrifft hydrophile Polyolefinmaterialien, insbesondere Fasern und/oder Filamente und/oder Vliese und/oder Vliesprodukte, hergestellt aus einer Mischung aus mindestens einem Polyolefin und mindestens einem Schmelzadditiv, enthaltend einen Fettsäureester, wobei die Polyolefinmaterialien eine nachträgliche Aktivierung des im Schmelzeadditiv enthaltenen Fettsäureesters auf der Oberfläche des Polyolefinmaterials aufweisen.

Polyolefine, insbesondere Polyethylen, Polypropylen sowie deren Copolymere, sind als Materialien für die Herstellung von Vliesstoffen etabliert. Typische Anwendungen, in denen Vliesstoffe aus Polyolefinen eingesetzt werden, sind Hygieneprodukte (Baby- und Damenhygiene, Inkontinenzprodukte) sowie Filtermaterialien. Werden Vliese beispielsweise als Topsheet in Babywindeln eingesetzt, müssen Sie für Körperflüssigkeiten wie z.B. Urin permeabel sein. Aufgrund des ausgesprochen hydrophoben Charakters der Polyolefine ist dann eine hydrophile Ausrüstung notwendig, die vorzugsweise nachträglich in Form eines sogenannten Topical Treatments erfolgt. Dabei werden wässrige Flotten, die amphiphile, oberflächenaktive Substanzen enthalten, vorzugsweise kationische (quarternäre Ammoniumsalze), anionische (Sulfate, Phosphate) oder nichtionische (Ethoxylate, Ester, Alkohole, Silikone) Komponenten, bzw. Formulierungen aus diesen Substanzen, eingesetzt.
Aus US 6,008,145 ist eine Rezeptur für die permanente Hydrophilierung von Polyolefinfasern, -filamenten und daraus hergestellten Textilien unter Verwendung quarternärer Ammoniumverbindungen bekannt.

Nach US 963,929 und DE 19645380 werden nichtionische Tenside in Verbindung mit kationisch modifiziertem Polydimethylsiloxan eingesetzt.
US 6,028,016 beschreibt eine Rezeptur und Methode, um Vliesstoffe dauerhaft benetzbar auszurüsten, wobei die Rezeptur einen Viskositätsmodifier zur gezielten Einstellung der Viskosität üblicherweise nicht verwendbarer oberflächenaktiver Substanzen aufweist, indem ein alkyliertes Polyglykosid in Verbindung mit oberflächenaktiven Substanzen, z. B. Mischungen aus modifiziertem Rizinusöl und Sorbitanmonooleat, verwendet wird.
Eine weitere Methode zum hydrophilen Ausrüsten von Polyolefin- oder Polyesterfasern wird in DE 19851688 beschrieben, wobei eine Mischung aus Polyolefin oder Polyester sowie einer Verbindung, welche mindestens eine Substanz aus der Klasse der ethoxylierten Zuckerester beinhaltet, offenbart wird.
In US 6,211,101 werden dauerhaft hydrophile Fasern und daraus hergestellte Vliesstoffe beschrieben, welche bevorzugt im medizinischen und Hygienebereich zum Einsatz kommen sollen und bei denen das Agens zur Ausrüstung der Fasern aus einem amphoionischen, oberflächenaktiven Betain und einem Dicarbonsäureester, hergestellt aus hochmolekularen Hydroxyfettsäureestern, besteht.

In der Praxis zeigt sich allerdings, dass das Topical Treatment von Vliesstoffen mit folgenden Nachteilen verbunden ist:
1. Die oberflächenaktiven Substanzen werden im Gebrauch durch Urin und andere Körperflüssigkeiten ausgewaschen, wodurch die hydrophilen Eigenschaften sukzessive verloren gehen. -
2. Die ausgewaschenen oberflächenaktiven Substanzen stören Absorptions- und Flüssigkeitsverteilungs-prozesse in Hygieneprodukten.
3. Die Verteilung der oberflächenaktiven Substanzen auf dem Vlies erfolgt oftmals nur ungleichmäßig.

Zur Verbesserung der Verarbeitbarkeit von Polyolefinen werden oftmals sogenannte Prozesshilfsmittel als Schmelzadditiv eingesetzt. Dabei finden z.B. mit polaren Gruppen versehene Fettsäurederivate als "externe Gleitmittel" Verwendung. (Ullmann's Encyclopedia of Industrial Chemistry, VCH Weinheim, 5^{th} Ed., Vol. A20, S. 479)
Wenig verbreitet ist allerdings bisher der Einsatz solcher Schmelzadditive zur gezielten Hydrophilierung von Polyolefinvliesen. Aufgrund von Phasenunverträglichkeit findet eine Migration von hydrophilen Resten an die Faseroberfläche statt. Die Migration findet im Verlaufe des Spinnprozesses in der Polymerschmelze aber auch noch nach dem Spinnprozess in der semikristallinen Faser statt.
Zum Einsatz von hydrophilen Schmelzadditiven werden in der US 5,439,734 Vliesstoffe mit dauerhafter Benetzbarkeit, bestehend aus einem Polyolefin und hydrophilen Additiven, welche Fettsäuren verestert mit dihydroxylierten Polyethylenglykolen umfassen, beschrieben.
Des weiteren sind aus der US 5,969,026 benetzbare Fasern und Fäden bestehend aus Polymeren und eingearbeiteten Benetzungsreagenzien bekannt, wobei die Polymere aus der Klasse der Polyolefine, Polyester und Polyamide ausgewählt sind und die aktive Substanz essentiell aus einem Glycerid besteht.

In den US 5, 240, 985; US 5,272,196, US 5,281,438, US 5,328,951, US 5,464,691 werden amphiphile Additive zur Modifizierung von Polyolefinen offenbart, dabei bestehen die amphiphile Verbindungen aus einer A-B-A-Kombination von zentraler hydrophiler Gruppe, z.B. Polyethylenglykol, verbunden mit zwei Seitengruppen, welche aus der Klasse der Fettsäuren oder langkettigen Alkohole selektiert werden.

Bekannt sind weiterhin aus US 5,696,191 und US 5,641,822 oberflächenmigrierende, extrudierbare thermoplastische Mischungen, bestehend aus mindestens einem Polyolefin und einem Additiv, wobei das Additiv ein Polysiloxanpfropfcopolymer mit Polyalkenoxidseitenketten ist. Durch Extrusion der Mischung lassen sich benetzbare Vliesstoffe herstellen, welche auch nach zwei Jahren noch die entsprechenden Eigenschaften aufweisen.
Ebenfalls bekannt sind aus US 20020019184 Polymere mit verbesserter Hydrophilie, welche erzeugt werden durch Zusatz einer entsprechenden Menge eines Additives, bestehend aus Fettsäuren verestert mit Polyethylenglykolen.
In der US 20010008965 werden Multikomponentenfasern, bei welchen die erste Komponente aus einem hydrophoben Polypropylen und eine zweite Komponente aus einem Blend eines hydrophoben Polypropylen und einem hydrophilen Schmelzadditiv besteht, beschrieben, dabei ist die zweite Komponente an der Oberfläche der Fasern positioniert.
WO 9842767A1, WO9842776A1 und WO9842898A1 offenbaren einen Prozess für die Herstellung einer Polyolefinmischung mit verbesserter Kompatibilität zu Adhesiven und/oder Coatings. Die Mischung besteht aus einem Polyolefin, einem migrierenden Amphiphilen und einem Übergangsmetall.
In den Patenten US 20020002242A1 und WO0158987A2 wird eine Möglichkeit beschrieben, die Oberflächenenergie von polymeren Substraten durch Einsatz neuer amphiphiler Blockcopolymere zu erhöhen, indem die Blockcopolymere, bestehend aus linearen hydrophoben Polymeren oder Oligomeren und einem statistisch hyperverzweigten Polymer oder Oligomer, völlig oder partiell mit lipophilen Endgruppen ausgerüstet sind.
Die US 5,582,904 beschreibt eine Methode und ein daraus resultierendes Produkt, wobei hydrophobe Polyolefinvliesstoffe mit hydrophilen Eigenschaften ausgerüstet werden. Hierzu wird der Polymerschmelze ein notwendiger Gehalt eines alkoxylierten Fettsäureamins, optional in Kombination mit bis zu 60 Gew-% eines primären Fettsäureamids, zugegeben.
Weiterhin sind aus der WO 0071789 Polypropylenfasern und daraus herstellbare Gebilde bekannt, bei welchen ein Fettsäuremonoglycerid dem Polypropylen als Schmelzadditiv zugefügt wird und weitere Zusätze in Form von Hydrophilieverbesserern und antimikrobiellen Substanzen verwendet werden.

Letztendlich werden in der WO 0242530 Fasern, Filamente und Vliesstoffe offenbart, die aus einem Schmelzeblend aus einem Polyolefin und einem Additiv bestehen, wobei das Additiv eine chemische Substanz, zusammengesetzt aus einer Alkylkette und einem hydrophilen Oligomer, ist. Die hergestellten Vliesstoffe zeigen eine dauerhafte Benetzbarkeit vorzugsweise gegenüber Körperflüssigkeiten.

Die mit Schmelzadditiven hydrophilierten Hygienevliese zeichnen sich insbesondere durch die hohe Permanenz der hydrophilen Gruppen auf der Faseroberfläche aus. Das durch Schmelzadditive erreichte Hydrophilieniveau ist jedoch in vielen Fällen zu gering, um den Anforderungen in der Hygieneindustrie gerecht zu werden.
An dieser Stelle setzt die Erfindung ein.
Der Erfindung liegt die Aufgabe zugrunde, hydrophile Polyolefinmaterialien insbesondere Fasern und/oder Filamente und/oder Vliese und/oder Vliesprodukte bereitzustellen, die gezielt und dauerhaft das für den Anwendungszweck erforderliche Niveau der Hydrophilie der Polyolefinmaterialien bzw. Permanenz der hydrophilen Eigenschaften aufweisen und eine spontane Benetzbarkeit der Oberfläche der Polyolefinmaterialien (initial wetting) besitzt.
Erfindungsgemäß wird diese Aufgabe durch die Ansprüche 1 bis 13, durch hydrophile Polyolefinmaterialien, insbesondere Fasern und/oder Filamente und/oder Vliese und/oder Vliesprodukte bestehend aus einer Mischung aus mindestens einem Polyolefin und einem Schmelzadditiv, enthaltend einen Fettsäureester, mit der allgemeinen Formel

R-CO-O-CH₂-CH₂-O-R'

wobei R ein gerad- oder verzweigtkettiger Alkylrest mit 23 bis 35 C-Atomen ist, und wobei

R' = H, -CH₃, -C₂H₅, -C₃H₇,-C₄H₉

ist, gelöst, wobei die hydrophilen Gruppen der Fettsäureester dabei durch Aufbringen kleiner Mengen einer oberflächenaktiven Substanz eine nachträgliche Aktivierung an der Faseroberflächen der Polyolefinmaterialien aufweisen.
Die Mischung, bestehend aus einem Polyolefin und einem Schmelzadditiv, enthaltend einen Fettsäureester, zur Herstellung der Polyolefinmaterialien wird dabei in bekannter Art und Weise extrudiert. Nachfolgend werden in einem üblichen Verfahren Fasern und/oder Filamente und aus diesen wiederum anschließend Vliese und/oder Vliesprodukte_hergestellt, wonach anschließend erfindungsgemäß durch Aufbringen einer oberflächenaktiven Substanz, einer Formulierung in Form einer wässrigen Zubereitung, auf die Faseroberfläche der Polyolefinmaterialien eine nachträgliche Aktivierung des Fettsäureesters erfolgt.
Bevorzugt ist das Polyolefin ausgewählt aus einer Gruppe umfassend Homo-, Co-, Random- und/oder Block(co)polymere des Ethens und/oder Propens. Aber auch Copolymere mit höheren Alkenen, so insbesondere auch Buten, Hexen und/oder Octen, sind möglich. Als besonders geeignet haben sich insbesondere die folgenden Polymere erwiesen:
Poly(ethylene) wie HDPE (high density polyethylene), LDPE (low density polyethylene), VLDPE (very low density polyethylene), LLDPE (linear low density polyethylene), MDPE (medium density polyethylene), UHMPE (ultra high molecular polyethylene), VPE (vernetztes Polyethylen), HPPE (high pressure polyethylene), Poly(propylene) wie isotaktisches Polypropylen; syndiotaktisches Polypropylen; Metallocen-katalysiert hergestelltes Polypropylen, schlagzähmodifiziertes Polypropylen, Random-Copolymere auf Basis Ethylen, Propylen und höheren 1-Olefinen, Blockcopolymere, auf Basis Ethylen, und Propylen; EPM (Poly[ethylen-co-propylen]); EPDM (Poly[ethylen-co-propylen-co-Dien]).

Geeignet sind weiterhin Pfropfcopolymere sowie Polymerblends, d. h. Mischungen von Polymeren, in denen unter anderem die vorgenannten Polymere enthalten sind, beispielsweise Polymerblends auf Basis von Polyethylen und Polypropylen.

Bevorzugt sind des weiteren Copolymere des Ethens und/oder Propens mit höheren Olefinen und/oder Diolefinen.

Besonders bevorzugt ist als Polyolefin ein Homopolymer des Ethens oder Propens. In einer bevorzugten Ausführungsform der Erfindung weist die Mischung 0,5 bis 10 Gew%, weiter bevorzugt 0,5 bis 3 Gew%, noch weiter bevorzugt 1 bis 2,5 Gew%, des Schmelzadditivs auf. Des weiteren kann die Mischung insbesondere 0,05 bis 2 Gew%, bevorzugt 0,1 bis 0,5 Gew%, Titandioxid aufweisen. Bevorzugte Mischungen weisen 96 bis 99 Gew% Homopolypropylen bzw. Homopolyethylen, 0 bis 1 Gew% Titandioxid und 1 bis 3 Gew% Schmelzadditiv auf. Derartige Mischungen konnten problemlos zur Herstellung eines Polyolefinmaterials wie beispielsweise ein Spinnvlies eingesetzt werden, und zwar trotz der in der thermoplastischen Schmelze vorherrschenden hohen Temperaturen in einem Bereich zwischen 190 und 310°C. Zur Herstellung der thermoplastischen Schmelzen kann zunächst die erfindungsgemäße Mischung im ungeschmolzenen Zustand miteinander vermengt und anschließend geschmolzen werden, es kann jedoch auch das Schmelzadditiv und gegebenenfalls weitere Zusatzstoffe wie Titandioxid mittels Seiten-Zuführungen in einen Extruder der Polyolefinschmelze zugeführt werden.

Die Erfindung betrifft weiterhin hydrophile Polyolefinmaterialien wie beispielsweise Fasern und/oder Filamente und/oder Vliese und/oder Vliesprodukte, die auch Bikomponentenfasern enthalten können. Beispielsweise kann eine Kern-Mantel-Struktur bei der Herstellung der Fasern bzw. Filamente geschaffen werden. Gemäß einer Ausgestaltung weist nur der Mantel des Polyolefinmaterials ein Schmelzadditiv auf.

Der Kern ist nicht mit Schmelzadditiv ausgerüstet. Eine andere Ausgestaltung sieht vor, daß der Kern ein Homopolypropylen, der Mantel wiederum ein Homopolyethylen aufweist, welches mit dem Schmelzadditiv ausgerüstet ist. Solche Strukturen erlauben es, das Schmelzadditiv nur in denjenigen Bereichen vorzusehen, in denen es zur Entfaltung seiner hydrophilen Eigenschaft notwendig ist. Neben einer Kern-Mantel-Struktur kann ein Faser- bzw. Filamentquerschnitt auch andere Mehrkomponentenverteilungen aufweisen. Beispielsweise können dies Segmentstrukturen, Halbmondstrukturen, nichtrunde Geometrien oder sonstige Strukturen sein;

Eine bevorzugte Ausgestaltung der Erfindung zur nachträglichen Aktivierung des im Schmelzadditiv enthaltenen Fettsäureesters auf der Faseroberfläche des Polyolefinmaterials ist eine Formulierung in Form einer wässrigen Zubereitung, die erfindungsgemäß eine kationisch modifizierte Silikonverbindung und eine quarternäre Ammoniumverbindung enthält, die ein quarternisierter Ester aus Fettsäuren und Triethanolamin ist.. Dabei ist die Formulierung in Form einer wässrigen Zubereitung bevorzugt physikalisch auf der Faseroberfläche des Polyolefinmaterials fixiert.
In einer Ausführungsform der Erfindung weist die Mischung, aus der die hydrophilen Polyolefinmaterialien hergestellt sind, 0,01 bis 0,5 Gew-%, vorzugsweise 0,05 bis 0,15 Gew-% der Formulierung zur Aktivierung des im Schmelzadditiv enthaltenen Fettsäureesters auf der Faseroberfläche auf.
Die Erfindung betrifft weiterhin eine Faser und/oder ein Filament und/oder ein Vlies und/oder Vliesprodukte, hergestellt aus dem erfindungsgemäßen Polyolefinmaterial.
Die erfindungsgemäßen Polyolefinmaterialien, insbesondere Fasern und/oder Filamente und/oder Vliese und/oder Vliesprodukte , hergestellt aus einer Mischung aus mindestens einem Polyolefin und mindestens einem Schmelzadditiv, enthaltend einen Fettsäureester, wobei die Polyolefinmaterialien eine nachträgliche Aktivierung des im Schmelzeadditiv enthaltenen Fettsäureesters auf der Oberfläche des Polyolefinmaterials aufweisen, sind neben der Anwendung in einem sogenannten "top sheet" auch einsetzbar als sogenannte "acquisition layer". Aufgrund ihrer permanent hydrophilen Eigenschaften können derartige Polyolefinmaterialien neben dem Einsatz bei Hygiene- und/oder Medikalartikeln auch dort eingesetzt werden, wo es auf eine schnelle Flüssigkeitsaufnahme ankommt. Dies ist beispielsweise im Filterbereich der Fall.

So kann eine Filterlage die erfindungsgemäßen hydrophilen Polyolefinmaterialien in Form von Vliesen aufweisen, wobei die Flüssigkeit an eine weiter darunter liegende Schicht transportiert wird. Partikel in der Flüssigkeit können durch das Vlies jedoch zurückgehalten werden. Durch die schnelle Flüssigkeitsaufnahme wird vermieden, daß sich vor dem Vlies ein Flüssigkeitsstau bildet.
Gemäß einer Ausgestaltung weist das erfindungsgemäße Polyolefinmaterial Durchdringzeiten (Repeated Strike Through Time) nach der EDANA Testmethode ERT 154.0-00 von kleiner als 5 s auf.
Weiter bevorzugt weist das Polyolefinmaterial bei Bestimmung des Überlaufgewichts gemäß EDANA Testmethode ERT 152.0-99 (Repeated Run-Off) ein Überlaufgewicht von weniger als 25 Gew-% der Testflüssigkeit, bezogen auf die aufgegebene Flüssigkeitsmenge, auf.

Diese und weitere vorteilhafte Ausgestaltungen und Weiterbildungen der vorliegenden Erfindung werden anhand der nachfolgenden Beispiele näher erläutert. Die dabei dargelegten Merkmale können mit den weiter oben beschriebenen zu zusätzlichen Weiterbildungen führen, die im einzelnen jedoch hier nicht ausgeführt werden. Es zeigen im einzelnen:
- Fig. 1: einen Ausschnitt aus einem Hygieneprodukt;
- Fig. 2: einen Ausschnitt aus einem Ölaufsaugfilter;
- Fig. 3: einen Ausschnitt aus einem flüssigkeitsaufnehmenden Produkt.

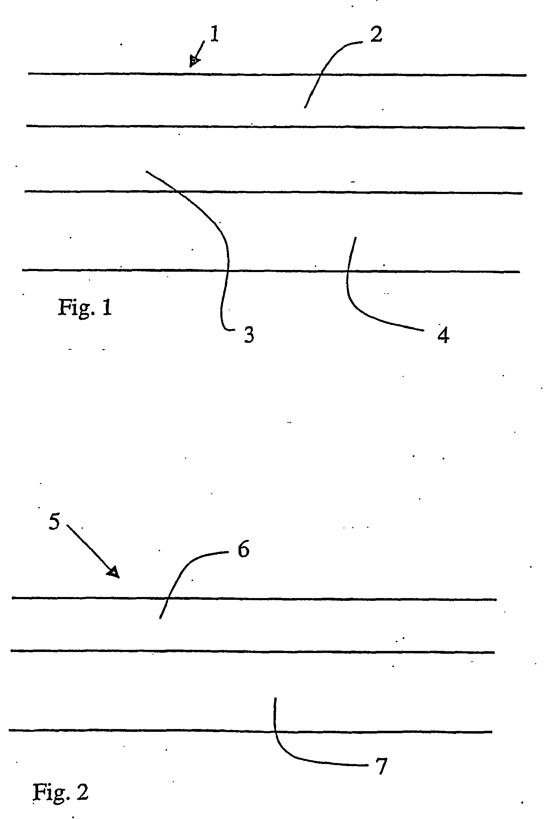

Fig. 1 zeigt einen Ausschnitt aus einem Hygieneprodukt 1. Das Hygieneprodukt 1 weist eine Oberlage 2, eine Verteilungslage 3 und einen Kern 4 auf. Die Oberlage 2 ist aus einem Vliesstoff, hergestellt aus den erfindungsgemäßen hydrophilen Polyolefinmaterialien. Das aus den erfindungsgemäßen hydrophilen Polyolefinmaterialien hergestellte, hydrophile Vlies nimmt Flüssigkeit auf und leitet sie weiter an die Verteilungslage 3. Von der Verteilungslage 3 kann die Flüssigkeit an den Kern 4 weitergegeben werden. Im Kern 4 wird die Flüssigkeit gespeichert. Neben der hydrophilen Eigenschaft der Oberlage 2 kann auch die Verteilungslage 3 hergestellt sein aus den erfindungsgemäßen hydrophilen Polyolefinmaterialien und somit stark hydrophil sein. Die Verteilungslage 3 kann jedoch auch aus einem anderen thermoplastischen Material hergestellt sein. Beispielsweise ist die Oberlage 2 ein Spinnvlies, während die Verteilungslage 3 ein schmelzgeblasenes Vlies ist. Vorzugsweise weist die Verteilungslage 3 eine höhere Hydrophilie, bevorzugt eine mindestens um 10%, weiter bevorzugt eine mindestens um 20% höhere auf als die Oberlage 2. Auf diese Weise wird eine Sogwirkung von einer Oberfläche der Oberlage 2 hin zur Verteilungslage 3 erzielt.

Fig. 2 zeigt einen Ausschnitt aus einem Ölfilter 5. Der Ölfilter 5 weist eine Sauglage 6 auf. Die Sauglage 6 dient einerseits der Aufnahme von in Kontakt mit der Sauglage tretendem Öl. Zum anderen dient die Sauglage 6 auch als Filter gegenüber im Öl enthaltenen Partikeln, die nicht weitertransportiert werden sollen. Der Sauglage 6 schließt sich in diesem Beispiel eine weitere, nicht zwingend notwendige Filterschicht 7 an. Die Filterschicht 7 ist vorzugsweise feinporiger als die Sauglage 6. Die Sauglage 6 dient als Vorfilter für die Filterschicht 7. Der Ölfilter 5 kann beispielsweise für einen permanenten Einsatz vorgesehen sein, oder aber auch nur bei Bedarf eingesetzt werden. Die Sauglage 6 wird durch ein aus den erfindungsgemäßen hydrophilen Polyolefinmaterialien hergestelltes Vlies gebildet. Die darunter liegende Filterschicht 7, welche auch Saugeigenschaften aufweisen kann, kann ebenfalls ein Vlies sein, welches aus den erfindungsgemäßen hydrophilen Polyolefinmaterialien hergestellt ist. Die Sauglage 6 kann auch einzeln als Ölaufsaugmaterial dienen. Dieses findet beispielsweise dort Verwendung, wo austretendes Öl aus Maschinen o.ä. aufgefangen werden soll.

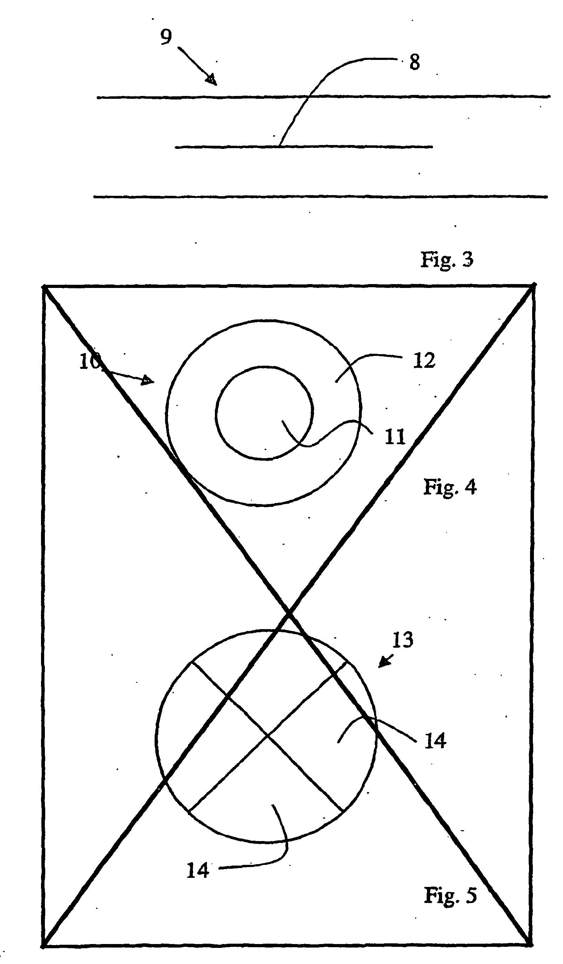

Fig. 3 zeigt eine Verwendung eines Vlieses, welches aus den erfindungsgemäßen hydrophilen Polyolefinmaterialien hergestellt ist, zur Flüssigkeitsaufnahme, bei der ein hydrophiles Vlies 8 in einem Produkt 9, hier zwischen zwei weiteren Lagen angeordnet, enthalten ist. Das hydrophile Vlies 8 ist in der Lage, Feuchtigkeit im Produkt 9 aufzunehmen und in sich selbst zu speichern. Beispielsweise kann das Produkt 9 dazu eingesetzt werden, die im hydrophilen Vlies 8 gespeicherte Feuchtigkeit bei Bedarf wieder freizusetzen. Die Freisetzung kann beispielsweise durch Erwärmung des Produktes 9 erfolgen.

Nachstehend soll die Erfindung an Beispielen näher erläutert werden.

Es wurden unterschiedliche Polyolefinmischungen hergestellt und aus diesen mittels des Lurgi-Docan-Spinnvliesprozesses Polyolefinmaterialien in Form eines Vlieses mit einem Basisgewicht von 30g/m² hergestellt. Im einzelnen wurden die Vliese aus den folgenden Materialien hergestellt:

### Referenz

Als Referenz wurde ein Spinnvlies hergestellt aus 100 Gew% Homopolypropylen (Firma Basell, Moplen HP 460R), welches eine Standard-Grundstabilisierung für den Extrusionsprozeß aufweist.

### Mischung 1

Mischung 1 wies 98 Gew% des Homopolypropylens gemäß der Referenz sowie zusätzlich 2 Gew% des Schmelzadditivs C₂₅H₅₁-CO-O-CH₂-CH₂-O-CH₃ auf.

### Mischung 2

Mischung 2 wies 97,6 Gew% des Homopolypropylens gemäß der Referenz, 2 Gew% des Schmelzadditivs gemäß Mischung 1 sowie zusätzlich 0,4 Gew% eines Titandioxid-Masterbatchs (Firma Clariant, Remfin RCLAP, Korngröße 2,2 bis 2,6 microns) auf.

Sowohl die Referenz als auch die Mischungen 1 und 2 wurden unter identischen Verfahrensbedingungen zu einem Spinnvlies verarbeitet.
Die erfindungsgemäße Aktivierung der Fettsäureester auf der Faseroberfläche; der aus der Mischung 2 hergestellten Vliese, erfolgte mittels Handsprühpistole durch Aufbringen einer Formulierung B in Form einer wässrigen Zubereitung, enthaltend unter anderem eine Silikonverbindung, die kationisch modifiziert ist und eine quarternäre Ammoniumverbindung, die ein quarternisierter Ester aus Fettsäuren und Triethanolamin ist, auf das Vlies und anschließender Trocknung bei Raumtemperatur über einen Zeitraum von 10 Stunden.
Zum Vergleich hierzu wurde ein Vlies aus Mischung 2 in gleicher Art unter Verwendung einer Formulierung A in Form einer wässrigen Zubereitung behandelt, wobei die Mischungen folgende Mengen an Formulierungen A bzw. Formulierungen B aufweisen:
- Muster 8: 0,15 Gew-% Formulierung A
- Muster 9: 0,05 Gew-% Formulierung B
- Muster 10: 0,15 Gew-% Formulierung B

Wie der Tabelle 2 zu entnehmen ist, enthalten die Mischungen der Muster 2 bis 5 aus reinem Polypropylenvlies als Referenz ebenfalls verschiedene Mengen an Formulierungen A und Formulierungen B.

Zudem weist das Muster 11 eine Behandlung mit reinem Wasser auf. Damit wird der aktivierende Effekt der reinen Befeuchtung ohne Verwendung der Formulierung A bzw. Formulierung B untersucht.

Die Hydrophilie der Muster bzw. Permanenz der hydrophilen Eigenschaften wurden durch Repeated Strike Through Time Messungen gemäß der EDANA Testmethode ERT 154.0.00 bzw. Repeated Run Off Messungen gemäß der EDANA Testmethode ERT 152.0-99) ermittelt (Tabellen 2 und 3).
Darüber hinaus wurde das Auswaschverhalten (wash-out) in Anlehnung an US 5,945,175 der hergestellten Spinnvliese aus den Mischungen 1 und -2 ermittelt (Tabelle 1).

Das Auswaschverhalten (wash-out) wurde mittels der folgenden Testmethode ermittelt:

Man bestimmt vor dem Eintauchen des Spinnvlieses in das Wasser dessen Oberflächenspannung nach DIN 53914. Aus dem Vliesstoff werden Proben ausgestanzt (ca. 2,5 x 22 cm, etwa 0,17 g) und für 30 Minuten in 80 ml Wasser getaucht. Anschließend wird die Oberflächenspannung des Wassers erneut gemessen.

**Tabelle 1**

| **Oberflächenspannung (mN/m)** | **Mischung 1** | **Mischung 2** |
|---|---|---|
| Vor dem Test | 72,5 | 72,5 |
| Nach dem Test | 65,5 | 66,8 |

Üblicherweise wird bei Polyolefinen mit einer nachträglichen hydrophilen Ausstattung nach dem "Wash-out"-Test die Oberflächenspannung deutlich unter 60 mN/m gesenkt. Wie die Testergebnisse für Mischung 1 wie auch Mischung 2 zeigen, bleibt die Oberflächenspannung bei den erfindungsgemäß hergestellten Vliesen jedoch annähernd konstant. Daraus ist der Schluß zu ziehen, daß ein Auswaschen des Schmelzadditivs unterbleibt. Mischungen 1 und 2 sowie auch weitere erfindungsgemäße Mischungen ermöglichen eine permanent hydrophile Vliesherstellung. Insbesondere wird das Schmelzadditiv in einer derartigen Menge zugesetzt, daß das Wasser nach dem "Wash-out"-Test eine Oberflächenspannung aufweist, die sich um weniger als 15% gegenüber der ursprünglichen ändert. Vorzugsweise liegt die Änderung der Oberflächenspannung des Wassers in einem Bereich, der unterhalb von 2% liegt. Eine vorteilhafte Oberflächenspannung des Wassers nach Auswaschung des Vlieses liegt in einem Bereich zwischen 60 mN/m und 70 mN/m.

Die Durchdringzeit (Repeated Strike Through Time) gemäß EDANA ERT 154.0.00 ist in Tabelle 2 wiedergegeben.

Das Referenz-Vlies wies die für Polyolefine typischen hydrophoben Eigenschaften auf. Der eingesetzte synthetische Urin (0,9%ige Kochsalzlösung) war nicht in der Lage, das Vlies zu durchdringen. Daher wurde der Test nach mehr als 60 Sekunden jeweils abgebrochen. Die jeweils mit dem Schmelzadditiv hergestellten Vliese gemäß den Mischungen 1 und 2 dagegen wiesen Durchdringzeiten auf, die unterhalb von 4 Sekunden lagen. Wie aus der Tabelle 2 zu entnehmen ist, lagen die Zeiten bei dem Vlies aus Mischung 1 etwas unterhalb der Zeiten des Vlieses aus Mischung 2. Während beim Vlies nach Mischung 1 die hydrophilen Eigenschaften des Vlieses geringfügig nach dem ersten Lauf abnimmt, verstärkt sich die hydrophile Eigenschaft des Vlieses aus der Mischung 2 dagegen in den weiteren Läufen.

Wie aus den der Tabelle 2 zu entnehmenden Zeiten zu entnehmen ist, ist das mit dem Schmelzadditiv ausgerüstete Vlies nicht nur im ersten Lauf in der Lage, für eine schnelle Durchlässigkeit des aufgetragenen künstlichen Urins zu sorgen. Vielmehr besteht diese Eigenschaft darüber hinaus bei mehrfacher Nässung. Dieses ist insbesondere wichtig bei Einsatz eines derartigen Vlieses als Oberlage in einer Windel, Binde oder Inkontinenzprodukt. Bei diesen hat das Produkt in der Regel nicht nur einen einmaligen Flüssigkeitsschub aufzunehmen und zu verteilen, vielmehr wird gefordert, daß eine derartige Flüssigkeitsaufnahme und -verteilung auch wiederholbar ist. Um den Tragekomfort eines derartigen Hygieneartikels für den Nutzer zu erhöhen, weist das Vlies vorteilhafterweise eine Durchdringzeit auf, die auch nach dem dreimaligen Testlauf unterhalb von 4 Sekunden liegt.

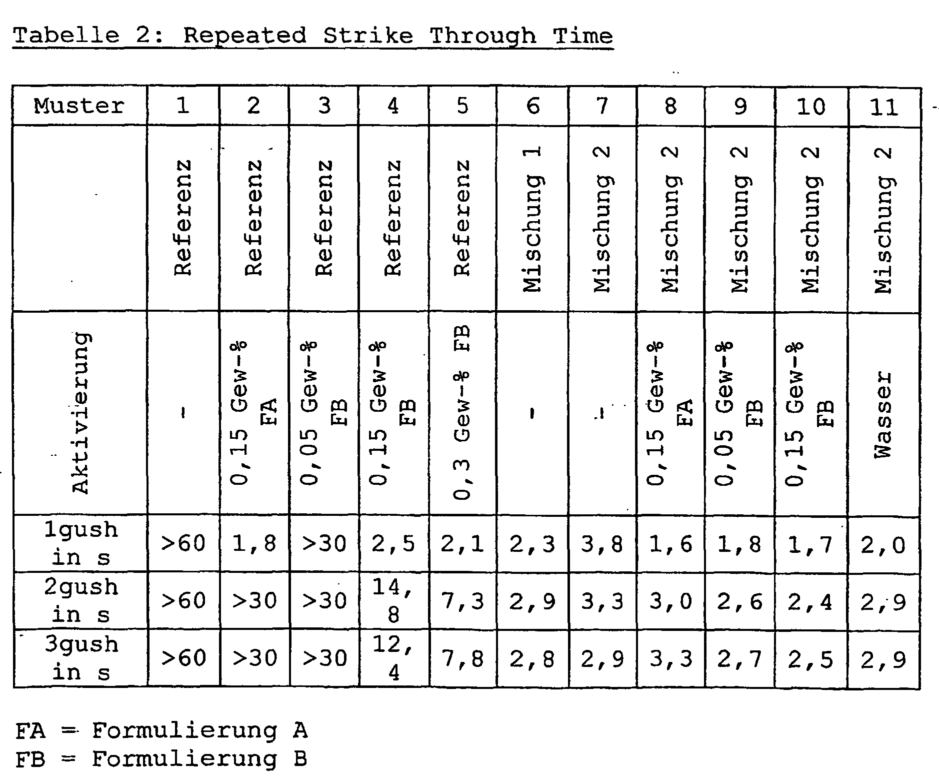

Es ist bekannt, dass Fettsäureester als Dispergiermittel für anorganische Füllstoffe, z.B. Pigmente, dienen können. In EP0605831A1 wird der entsprechende Zusatz von Fettsäureestern zu Mischungen bestehend aus Ethylen/Olefin-Copolymeren und anorganischen Füllstoffen beschrieben. Wie sich aber beim Vergleich der Eigenschaften der Vliesstoffe, hergestellt aus Mischung 1 und Mischung 2, zeigt, wirkt das Schmelzadditiv hierbei nicht als Dispergiermittel, sondern offenkundig ausschließlich als Hydrophilierungsmittel an der Faseroberfläche. Auch bei Zusatz von Titandioxid (Mischung 2) werden niedrige Werte für die Repeated Strike Through Time gemessen.

Erwartungsgemäß weist das Muster 1 die für Polyolefine typischen hydrophoben Eigenschaften auf, die durch lange Durchdringungszeiten gekennzeichnet sind.

Das erfindungsgemäße Aufbringen der Formulierung A auf die Oberfläche des Polyolefinmaterials (Vlies: Muster 8) führt dazu, dass kurzfristig das Hydrophilieniveau (niedrigere Strike Through- und Run Off Werte) des mit Schmelzadditiv ausgerüsteten Vlieses verbessert wird. Allerdings verschlechtern sich die Run-Off Werte mit zunehmender Zahl der Wiederholung.
Dennoch bewirkt die geringe Menge der Formulierung A (0,05 Gew-% bei Muster 8), die auf dem reinen PP-Vlies (Muster 2) noch keinen hydrophilierenden Effekt zeigt, in Kombination mit einem hydrophilierenden Schmelzadditiv (Muster 8) eine signifikante Verbesserung der Permanenz der Hydrophilie.

Überaschenderweise wurde beim erfindungsgemäßen Aufbringen geringer Mengen der Formulierung B (Muster 9 - 10) auf die Faseroberfläche des Polyolefinmaterials gefunden, dass sowohl das Hydrophilieniveau (niedrigere Strike Through- und Run Off Werte) als auch die Permanenz der hydrophilen Eigenschaften, gegenüber einem nur mit Schmelzadditiv modifizierten Polyolefinmaterials (Vlies: Muster 7) verbessert wird.

Die in geringen Mengen nachträglich aufgebrachte Formulierung B, enthaltend ein kationisch modifiziertes Silicon und eine quarternäre Ammoniumverbindung, dient offensichtlich als Aktivator.
Während die Muster 3 - 5 ab dem 2. gush bei Repeated-Strike-Through und -Run-Off Messungen eine starke Abnahme der Hydrophilie aufweisen, welche auf ein Auswaschen der Formulierung B zurückzuführen ist, zeigen Muster 9 und 10 eine Verbesserung der Permanenz der Hydrophilie.

Durch die Aktivierung eines mit einem Schmelzadditiv modifizierten Vlieses mit Hilfe geringer Mengen der Formulierung B, vorzugsweise 0,05 bis 0,15 Gew-% werden erfindungsgemäß Vliese entsprechend Muster 9 und 10 erhalten, die sich durch gute, dauerhafte Hydrophilie auszeichnen. Dieses Eigenschaftsprofil ist mit der Formulierung B alleine und ohne den Einsatz eines Schmelzadditivs nicht zu erzielen. Eine Auflagemenge von 0,3 Gew-% der Formulierung B auf einem reinen PP-Vlies entsprechend Muster 5 ist zu niedrig, um dem Material eine den Mustern 8 und 9 vergleichbare Hydrophilie und Permanenz der Hydrophilie zu verleihen. Ein Vergleich der Hydrophilie sowie Permanenz der hydrophilen Eigenschaften von Muster 11 und Muster 7 zeigt, dass die Behandlung nur mit reinem Wasser keine signifikanten aktivierenden Effekte bewirkt.
Vorteilhafterweise zeichnen sich die durch nachträgliche Aktivierung des hydrophilen Schmelzadditivs hergestellten Vliese deutlich durch eine verbesserte Hydrophilie im Vergleich zu einem nicht aktivierten Vlies aus, insbesondere bei spontaner Benetzung des trockenen Vlieses.

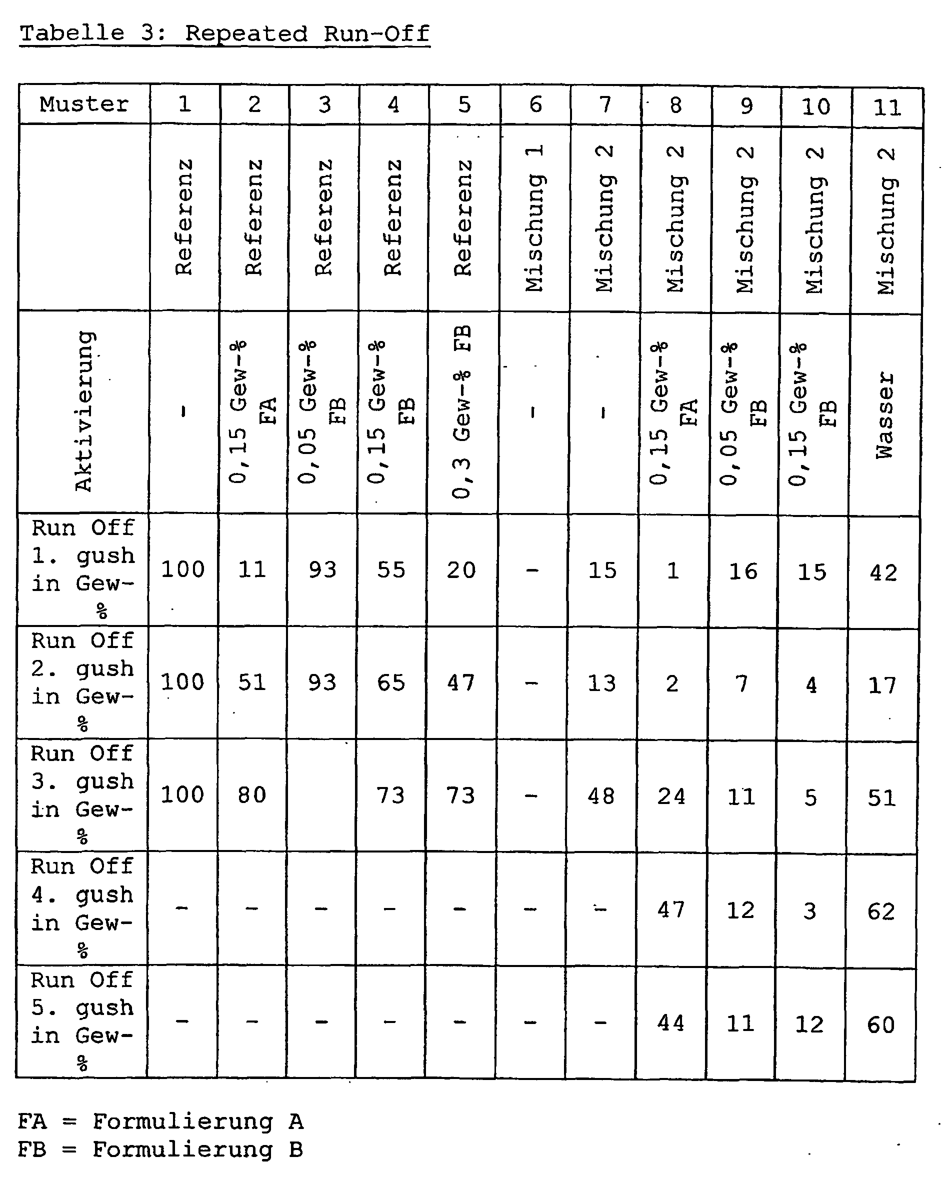

## Patentansprüche

1. Hydrophile Polyolefinmaterialien, insbesondere Fasern und/oder Filamente und/oder Vliese und/oder Vliesprodukte, hergestellt aus einer Mischung aus mindestens einem Polyolefin und mindestens einem Schmelzadditiv, enthaltend einen Fettsäureester, mit der allgemeinen Formel
R-CO-O-CH₂-CH₂-O-R',
wobei R ein gerad- oder verzweigtkettiger Alkylrest mit 23 bis 35 C-Atomen ist, und wobei
R'= H, -CH₃, -C₂H₅, -C₃H₇, -C₄H₉
ist,
**dadurch gekennzeichnet, dass** die Polyolefinmaterialien eine nachträgliche Aktivierung des im Schmelzadditiv enthaltenen Fettsäureesters auf der Oberfläche des Polyolefinmaterials durch Aufbringen einer oberflächenaktiven Substanz in Form einer Formulierung, die eine Siliconverbindung und eine quarternäre Ammoniumverbindung, enthält, aufweisen.

2. Polyolefinmaterial nach Anspruch 1,
**dadurch gekennzeichnet, dass** die Siliconverbindüng kationisch modifiziert ist.

3. Polyolefinmaterial nach Anspruch 1 und 2,
**dadurch gekennzeichnet, dass** die quarternäre Ammoniumverbindung ein quarternisierter Ester aus Fettsäuren und Triethanolamin ist.

4. Polyolefinmaterial nach Anspruch 1 bis 3,
**dadurch gekennzeichnet, dass** die Formulierung zur nachträglichen Aktivierung des verwendeten Fettsäureesters auf einer Faseroberfläche eine wässrige Zubereitung ist.

5. Polyolefinmaterial nach Anspruch 1 bis 4,
**dadurch gekennzeichnet, dass** die Formulierung zur nachträglichen Aktivierung des verwendeten Fettsäureesters auf einer Faseroberfläche bevorzugt physikalisch auf der Oberfläche fixiert ist.

6. Polyolefinmaterial nach Anspruch 1 bis 5,
**dadurch gekennzeichnet, dass** dieses 0,01 bis 0,5 Gew-%, vorzugsweise 0,05 bis 0,15 Gew-%, der Formulierung zur Aktivierung des verwendeten Fettsäureesters auf einer Faseroberfläche aufweist.

7. Faser, hergestellt aus einem Polyolefinmaterial gemäß einem der Ansprüche 1 bis 6.

8. Filament, hergestellt aus einem Polyolefinmaterial gemäß einem der Ansprüche 1 bis 6.

9. Vlies, hergestellt aus einem Polyolefinmaterial gemäß einem der Ansprüche 1 bis 6.

10. Verwendung eines Polyolefinmaterials gemäß einem der Ansprüche 1 bis 6 zur Herstellung von Fasern und/oder Filamenten und/oder Vliesen und/oder Vliesprodukten.

11. Vlies, gemäß Anspruch 8,
**dadurch gekennzeichnet, dass** es eine Durchdringzeit (Repeated Strike Through Time Messungen) gemäß EDANA Testmethode ERT 154.0.00 von kleiner als 5 s aufweist.

12. Vlies, gemäß Anspruch 8,
**dadurch gekennzeichnet, dass** es bei Bestimmung eines Überlaufgewichts gemäß EDANA Testmethode ERT 152.0-99 (Repeated Run-Off) ein Überlaüfgewicht von weniger als 25 Gew-% der Testflüssigkeit, bezogen auf eine aufgegebene Flüssigkeitsmenge, aufweist.

13. Vliesprodukt, beinhaltend ein Vlies gemäß einem der Ansprüche 10 bis 11.

14. Verfahren zur Herstellung hydrophiler Polyolefinmaterialien, insbesondere Fasern und/oder Filamente und/oder Vliese und/oder Vliesprodukte, die mindestens aus einem Polyolefin und einem Schmelzadditiv, enthaltend einen Fettsäureester, bestehen,
**dadurch gekennzeichnet, dass** die Polyolefinmaterialien eine nachträgliche Aktivierung des im Schmelzadditiv enthaltenen Fettsäureesters auf der Faseroberfläche durch Aufbringen einer oberflächenaktiven Substanz in Form einer Formulierung, die eine Siliconverbindung und eine quarternäre Ammoniumverbindung, enthält, aufweist.

## Claims

1. Hydrophilic polyolefin materials, in particular fibers, and/or filaments, and/or nonwovens, and/or nonwoven products made from a mixture of at least one polyolefin and at least one melt additive containing a fatty acid ester of the general formula
R-CO-O-CH₂-CH₂-O-R',
where R is a straight-chain or branched-chain alkyl residue with 23 to 35 carbon atoms, and where
R' = H, -CH₃, -C₂H₅, -C₃H₇, -C₄H₉,
**characterized in that** the polyolefin materials include a subsequent activation of the fatty acid ester contained in the melt additive on the surface of the polyolefin material by applying a surface-active substance in the form of a formulation which contains a silicone compound and a quaternary ammonium compound.

2. Polyolefin material of claim 1,
**characterized in that** the silicone compound is cationically modified.

3. Polyolefin material of claims 1 and 2,
**characterized in that** the quaternary ammonium compound is a quaternized ester of fatty acids and triethanol amine.

4. Polyolefin material of claims 1-3,
**characterized in that** the formulation for the subsequent activation of the used fatty acid ester on a fiber surface is an aqueous preparation.

5. Polyolefin material of claims 1-4,
**characterized in that** the formulation for the subsequent activation of the used fatty acid ester on a fiber surface is set on the surface, preferably physically. (since not contained in)

6. Polyolefin material of claims 1-5,
**characterized in that** same contains 0.01 to 0.5% by weight, preferably 0.05 to 0.15% by weight of the formulation for activating the used fatty acid ester on a fiber surface.

7. Fiber produced from a polyolefin material of one of claims 1-6.

8. Filament produced from a polyolefin material of one of claims 1-6.

9. Nonwoven produced from a polyolefin material of one of claims 1-6.

10. Use of a polyolefin material of one of claims 1-6, for producing fibers, and/or filaments, and/or nonwovens, and/or nonwoven products.

11. Nonwoven of claim 8,
**characterized in that** it has repeated strike-through time measurements according to the EDANA test method ERT 154.0.00 of smaller than 5 seconds.

12. Nonwoven of claim 8,
**characterized in that** it has in the determination of a repeated runoff according to the EDANA test method ERT 152.0-99, a repeated runoff of less than 25% by weight of the test fluid based on an applied quantity of fluid.

13. Nonwoven product containing a nonwoven of one of claims 10-11.

14. Method of producing hydrophilic polyolefin materials, in particular fibers, and/or filaments, and/or nonwovens, and/or nonwoven products, which consist of at least one polyolefin and a melt additive containing a fatty acid ester,
**characterized in that** the polyolefin materials include a subsequent activation of the fatty acid ester contained in the melt additive on the fiber surface by applying a surface-active substance in the form of a formulation, which contains a silicone compound and a quaternary ammonium compound.

## Revendications

1. Matériaux polyoléfiniques hydrophiles, en particulier fibres et/ou filaments et/ou non-tissés et/ou produits à base de non tissés, fabriqués à partir d'un mélange d'au moins une polyoléfine et d'au moins un additif de fusion, contenant un ester d'acides gras, de formule générale
R-CO-O-CH₂-CH₂-O-R,
R étant un radical alkyle à chaîne droite ou ramifiée portant 23 à 35 atomes de C et
R = H, -CH₃, -CH₂H₅, -C₃H₇, -C₄H₉
**caractérisés en ce que** les matériaux polyoléfiniques présentent une activation postérieure de l'ester d'acides gras contenu dans l'additif de fusion à la surface du matériau polyoléfinique par application d'une substance tensioactive sous la forme d'une formulation qui contient un composé du silicium et un composé ammonium quaternaire.

2. Matériau polyoléfinique selon la revendication 1, **caractérisé en ce que** le composé du silicium est modifié par voie cationique.

3. Matériau polyoléfinique selon la revendication 1 ou 2, **caractérisé en ce que** le composé ammonium quaternaire est un ester quaternisé d'acides gras et de triéthanolamine.

4. Matériau polyoléfinique selon les revendications 1 à 3, **caractérisé en ce que**, sur une surface de fibres, la formulation d'activation postérieure de l'ester d'acides gras utilisé est une préparation aqueuse.

5. Matériau polyoléfinique selon les revendications 1 à 4, **caractérisé en ce que** la formulation d'activation postérieure de l'ester d'acides gras utilisé est fixée sur une surface de fibres de préférence physiquement à la surface.

6. Matériau polyoléfinique selon les revendications 1 à 5, **caractérisé en ce que** celui-ci présente, sur une surface de fibres, 0,01 à 0,5 % en poids, de préférence 0,05 à 0,15 % en poids de la formulation d'activation de l'ester d'acides gras.

7. Fibre fabriquée à partir d'un matériau polyoléfinique selon l'une quelconque des revendications 1 à 6.

8. Filament, fabriqué à partir d'un matériau polyoléfinique selon l'une quelconque des revendications 1 à 6.

9. Non-tissé, fabriqué à partir d'un matériau polyoléfinique selon l'une quelconque des revendications 1 à 6.

10. Utilisation d'un matériau polyoléfinique selon l'une quelconque des revendications 1 à 6 pour fabriquer des fibres et/ou des filaments et/ou des non-tissés et/ou des produits non-tissés.

11. Non-tissé selon la revendication 8, **caractérisé en ce qu'**il présente un temps de pénétration (mesures Repeated Strike Through Time) selon la méthode test EDANA ERT 154.0.00 inférieur à 5 s.

12. Non-tissé selon la revendication 8, **caractérisé en ce qu'**il présente, lors de la détermination d'un poids de débordement selon la méthode test EDANA ERT 152.0-99 (Repeated Run-Off), par rapport à une quantité de liquide versé, un poids de débordement inférieur à 25 % en poids du liquide test.

13. Produit à base de non-tissé, contenant un non-tissé selon l'une quelconque des revendications 10 à 11.

14. Procédé de fabrication de matériaux polyoléfiniques hydrophiles, en particulier de fibres et/ou de filaments et/ou de non-tissés et/ou de produits non tissés, constitués d'au moins une polyoléfine et d'au moins un additif de fusion, contenant un ester d'acides gras, **caractérisé en ce que** les matériaux polyoléfiniques présentent une activation postérieure de l'ester d'acides gras contenu dans l'additif de fusion à la surface des fibres par application d'une substance tensioactive sous la forme d'une formulation qui contient un composé du silicium et un composé ammonium quaternaire
